# EUROPÄISCHE PATENTSCHRIFT

(11) **EP 2 272 373 B1**
(45) Veröffentlichungstag und Bekanntmachung des Hinweises auf die Patenterteilung: **16.01.2019**
(21) Anmeldenummer: 10006838.6
(22) Anmeldetag: 02.07.2010
(51) Int. Cl.: A22C 11/02

(54) **Vorrichtung zur Verarbeitung von Gewürzfolien bei der Wurst- und Käseherstellung**
Device for processing spice films in the production of sausage and cheese
Dispositif de traitement de feuilles d'épices dans la fabrication de saucisses et de fromages

(30) Priorität: 10.07.2009 DE 202009009461 U
(43) Veröffentlichungstag der Anmeldung: 12.01.2011
(73) Patentinhaber: Kalle GmbH, 65203 Wiesbaden (DE)
(72) Erfinder: Auf der Heide, Dirk, 49594 Alfhausen (DE); König, Martina, 65207 Wiesbaden (DE)
(74) Vertreter: Plate, Jürgen

(56) Entgegenhaltungen:
- DE-A1- 19 608 001
- DE-B3- 10 357 688
- DE-U1-202006 014 864
- US-A- 5 993 868

## Beschreibung

Die Erfindung bezieht sich auf eine Vorrichtung zum Einfüllen eines pastösen Nahrungsmittels, bevorzugt einer Fleisch-, Wurst- oder Käsemasse, in einen Darm mit einem Füllrohr mit einem Einlassende und einem Auslassende, zwischen denen auf dem Füllrohr ein für eine Mehr- oder Vielzahl von zu füllenden Darmabschnitten vorgesehener Vorrat des Darmmaterials in Längsrichtung gestaucht angeordnet ist, wobei die Vorrichtung eine zwischen dem Einlassende und dem Auslassende angeordnete und das Füllrohr teil- oder vollumfänglich umgebende Anlegehülse für einen oder mehrere mit Zusatzstoffen für das betreffende Lebensmittel beschichtete(n) Streifen umfasst. Die Erfindung bezieht sich ferner auf ein Lebensmittel in einer schlauchförmigen Hülle (Darm), bei dem zwischen dem Lebensmittel und der umgebenden Hülle mindestens ein Streifen angeordnet ist, der mit mindestens einem übertragbaren Zusatzstoff beschichtet und/oder imprägniert ist.

Vorrichtungen zum Einfüllen einer Fleisch- oder Wurstmasse in Darmabschnitte, um sie einer Nachbehandlung, wie einem Reife- oder einem Garprozess zu unterziehen, sind hinlänglich bekannt. Für eine Nachbehandlung des Nahrungsmittels, bei der von der Außenseite her Zugaben, wie Gewürze einwirken und Aromastoffe an die Fleisch- oder Wurstmasse abgeben, war es in der Regel erforderlich, die Gewürze nach dem Befüllen des Darmes manuell aufzutragen. Hierzu wurde der Darm unmittelbar nach dem Befüllen in Längsrichtung aufgeschnitten, um die Außenseite der darin befindlichen Fleisch- oder Wurstmasse zugänglich zu machen. Nach dem Auftrag der Gewürze wird der Darm wieder geschlossen.

Alternativ zur obigen Vorgehensweise wird ein Strang der jeweiligen Fleisch- oder Wurstmasse in eine Pressform eingelegt, die zuvor mit einem längsseitig offenen Darmabschnitt ausgekleidet worden ist. Auf die in der Pressform befindliche Masse wird ein Streifen aufgelegt, der auf der zur Fleisch- oder Wurstmasse hin liegenden Seite mit Gewürzen beschichtet ist. Der längsseitig offene Darm wird geschlossen und der Inhalt der Pressform wird mittels eines Stempels verpresst.

Die vorstehend genannten manuellen Verfahren sind umständlich und zeitaufwendig.

In der DE 103 57 688 ist eine Vorrichtung beschrieben, die es gestattet, einen mit Zugaben beschichteten Streifen kontinuierlich während des Einfüllens einer Fleisch- oder Wurstmasse in einen Darm einzubringen, wobei es nicht erforderlich ist, den Darm in Längsrichtung zu öffnen. In der Vorrichtung wird der mit Zugaben beschichtete Streifen durch die äußere Kammer eines doppelwandigen Füllrohres zugeführt. Bei der Zuführung des Streifens löst sich aufgrund von Reibung an den Wänden des Füllrohrs ein Teil der Zugaben ab, wovon wiederum ein Teil an den Wänden haften bleibt und die Kammer zunehmend verstopft. Um Verstopfungen vorzubeugen, sowie aus Gründen der Hygiene ist es erforderlich, die Kammer in regelmäßigen Abständen zu reinigen. Die Reinigung der rohrförmigen Kammer ist aufgrund ihrer im Vergleich zur Länge geringen Weite jedoch schwierig und erfordert den Einsatz eines geeigneten Werkzeugs oder eines Reinigungsbades.

Der Erfindung liegt daher die Aufgabe zugrunde, eine Vorrichtung zu schaffen, bei der man zugleich mit dem Füllen des von dem Füllrohr abgezogenen Darmabschnittes einen mit Gewürzen oder anderen Nahrungsmittel-Additiven beschichteten Streifen zuführen kann, wobei die Vorrichtung einfach aufgebaut sein soll und die mit dem Streifen in Kontakt befindlichen Flächen frei zugänglich sind.

Diese Aufgabe wird gelöst durch eine Vorrichtung zum Einfüllen eines pastösen Nahrungsmittels in eine schlauchförmige Hülle, wobei die Vorrichtung ein Füllrohr mit einem Einlassende und einem Auslassende aufweist, auf dem sich ein Vorrat einer schlauchförmige Hülle in geraffter Form befindet, wobei die Vorrichtung eine zwischen dem Einlassende und dem Auslassende angeordnete und das Füllrohr teil- oder vollumfänglich umgebende Anlegehülse für einen oder mehrere mit übertragbaren Nahrungsmittelzusatzstoffen beschichtete(n) Streifen umfasst und dadurch gekennzeichnet ist, dass das Füllrohr und ein Teil der Anlegehülse einen vollumfänglich offenen Spalt begrenzen und dass die Vorrichtung mindestens eine zwischen der Anlegehülse (3) und dem Auslassende (22) angeordnete Anlegerolle (4) aufweist und ein elastisches Glied vorgesehen ist, welches die Anlegerolle (4) kraftschlüssig gegen das Füllrohr (2) drückt, derart, dass der Streifen (7) zwischen der Anlegerolle (4) und dem Füllrohr (2) hindurchgeführt werden kann.

Für die Erfindung ist wesentlich, den Streifen mit den auf das jeweilige Nahrungsmittel übertragbaren Zusatzstoffen in die Hülle einlaufen zu lassen, während die schlauchförmige Hülle entrafft und mit dem Nahrungsmittel gefüllt wird. Der Streifen wird durch den Endverschluss der Fleisch-, Wurst- oder Käsehülle, zweckmäßig ein Draht- oder Kunststoff-Clip, fixiert. Während der Weiterverarbeitung, z.B. durch Brühen, Kochen und/oder Räuchern, verbleibt der Streifen zwischen der Hülle und der Oberfläche des Nahrungsmittels. Bei der Weiterverarbeitung werden die Gewürze oder allgemein die Nahrungsmittelzusatzstoffe wenigstens teilweise auf die Oberfläche des Nahrungsmittels übertragen.

Vorteilhafte Weiterbildungen der Erfindung sind in den Unteransprüchen wiedergegeben und zeichnen sich dadurch aus, dass:
- der Spalt zwischen der Anlegehülse und dem Füllrohr in radialer Richtung zum Füllrohr eine Weite von 0,5 bis 2 cm, vorzugsweise von 0,8 bis 1,5 cm aufweist;
- sich der Spalt zwischen der Anlegehülse und dem Füllrohr in Richtung einer Längsachse des Füllrohrs über eine Länge von 0,5 bis 10 cm, vorzugsweise 1 bis 5 cm, und insbesondere 1 bis 2 cm erstreckt;
- die Anlegehülse einen ersten und zweiten Bereich aufweist, wobei der erste Bereich als teil- oder vollumfängliches Rohr und der zweite Bereich nach Art eines teilweisen oder vollständigen Kegelmantels ausgebildet ist;
- die Anlegehülse einstückig ausgebildet ist und ein den ersten und zweiten Bereich verbindender Übergangsbereich eine stetige Kontur aufweist;
- die Vorrichtung einen oder mehrere bogenförmige Führungsbügel zum Anlenken der Streifen an die Führungshülse aufweist;
- die Vorrichtung ein oder mehrere Magazine für die Streifen aufweist;
- die Magazine eine Rolle zum Aufnehmen und Bereitstellen der Streifen umfassen;
- die Magazine Führungsrollen zum Anlenken der Streifen an die Anlegehülse umfassen;
- die Vorrichtung mindestens eine zwischen der Anlegehülse und dem Auslassende angeordnete Anlegerolle aufweist und ein elastisches Glied vorgesehen ist, welches die Anlegerolle kraftschlüssig gegen das Füllrohr drückt, derart, dass der Streifen zwischen der Anlegerolle und dem Füllrohr hindurch geführt werden kann;
- das elastische Glied als Feder ausgebildet ist;
- die Vorrichtung ein Paar Anlegerollen mit Drehachsen aufweist, die im wesentlichen V-förmig von der Längsachse des Füllrohrs hinweg gerichtet sind, so dass jede der Anlegerollen eine Hälfte des Streifens von der Längsachse des Füllrohrs hinweg lenkt und der Streifen in Umfangsrichtung des Füllrohrs auseinander gezogen wird; und
- die Vorrichtung ein Paar Anlegerollen mit Drehachsen aufweist, die im wesentlichen V-förmig zur Längsachse des Füllrohrs hin ausgerichtet sind, so dass jede der Anlegerollen eine Hälfte des Streifens zur Längsachse des Füllrohrs hinlenkt und der Streifen in Umfangsrichtung des Füllrohrs auseinander gezogen wird.

Es können auch zwei oder mehr Streifen mit gleichen oder verschiedenfarbigen Nahrungsmittelzusatzstoffen zum Einsatz kommen, beispielsweise ein Streifen mit Paprikapulver und einer mit gefriergetrockneter und gemahlener Petersilie. Auf diese Weise wird eine Wurst mit einem roten und einem grünen Streifen erhalten. Die (Gewürz-)Streifen eignen sich insbesondere für die Herstellung von Aufschnittware. Dabei wird die Hülle und, soweit sie aus nicht-essbarem Material besteht, auch das Trägermaterial des Gewürzstreifens abgezogen. Die Wurst wird dann zu Scheiben aufgeschnitten. Die Aufschnittware gelangt dann, wie üblich, in einer Kunststoff-Folienverpackung in den Handel.

Die Fleisch-, Wurst- oder Käsewaren in der Hülle mit den innenliegenden (Gewürz-)Streifen kann auch direkt an den Endverbraucher abgegeben werden. In diesem Fall besteht der Träger des Gewürzstreifens zweckmäßig aus essbarem, vorzugsweise auch wasserlöslichem, Material, insbesondere aus Gelatine und/oder Kollagen. Die Positionierung des bzw. der Streifen wird vorteilhaft mit einem auf der Außenseite der in diesem Fall transparenten Hülle aufgebrachten Druckbild abgestimmt. Da die Nahrungsmittelzusatzstoffe in der Regel gefärbt sind, kann das Druckbild so farbig unterlegt sein.

Die Hülle selbst kann aus beliebigem Material bestehen. Vorzugsweise besteht sie aus thermoplastischem Kunststoff und ist ein- oder mehrschichtig ausgebildet.

Die Erfindung wird nachfolgend anhand von Zeichnungen näher erläutert. Dabei zeigen:
- Fig. 1: eine perspektivische Ansicht schräg von oben auf eine Vorrichtung zum Einfüllen einer Fleisch- oder Wurstmasse in einen Darm;
- Fig. 2-3: Draufsichten der Ober- und Unterseite der Vorrichtung;
- Fig. 4: eine vergrößerte Schnittansicht eines Teils der Vorrichtung;
- Fig. 5-6: eine perspektivische Ansicht eines Teils der Vorrichtung mit einem oberen und einem unteren Rollenpaar; und
- Fig. 7: eine perspektivische Ansicht einer Vorrichtung zum Zuführen von zwei Streifen.
- Fig. 8: eine bevorzugte Ausgestaltung der Anlegehülse

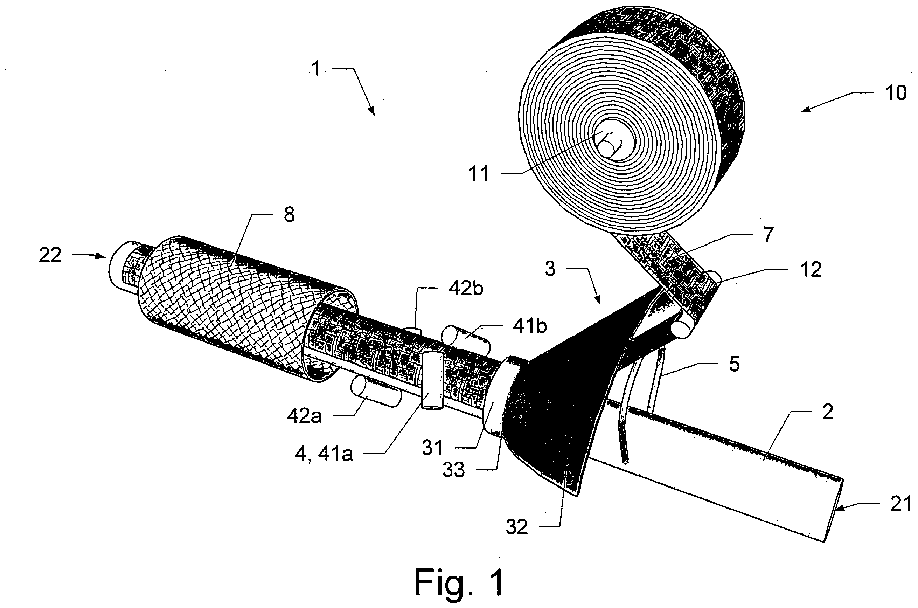

Fig. 1 zeigt eine erfindungsgemäße Vorrichtung 1 mit einem Füllrohr 2, mit dem eine Fleisch- oder Wurstmasse in einen Darmabschnitt (nicht gezeigt in Fig. 1) injiziert wird. Das Füllrohr 2 weist ein Einlassende 21 auf, an welches die Zuführeinrichtung für eine Fleisch- oder Wurstmasse angeschlossen wird. Am gegenüberliegenden Ende des Füllrohres 2, am Auslassende 22, wird der zu befüllende Darmabschnitt mit einem verschlossenen Ende bereitgehalten, wobei das für den einzelnen Darmabschnitt benötigte Darmmaterial 8 mit fortschreitendem Füllvorgang selbsttätig von dem Füllrohr 2 abgezogen wird. Dementsprechend befindet sich ein Vorrat des Darmmaterials 8 auf dem vom Auslassende 22 zum Einlassende 21 hin liegenden Außenumfang des Füllrohres 2. Um einen ausreichend großen Vorrat vorsehen zu können, ist die schlauchförmige Hülle 8 gerafft. Durch eine geeignete, in der Fig. 1 nicht dargestellte Bremse wird mit dem Verfüllen des sich abziehenden Darmabschnittes das Darmmaterial 8 in eine gestreckte Lage übergeführt und bei Erreichen der vorgesehenen Länge des Stranges der Fleisch- oder Wurstmasse abgebunden. Dies kann automatisch durch Ansetzen eines Clips geschehen, womit zugleich das Vorderende des nächsten zu füllenden Darmabschnittes verschlossen wird.

In den jeweiligen Darmabschnitt wird neben der Fleisch- oder Wurstmasse ein Streifen 7 eingebracht. Bei dem Streifen 7 handelt es sich um ein Trägerband aus Papier, Cellulose, Kunststoff, textilem Material, Kollagen und/oder Gelatine, das mit einem Nahrungsmittelzusatzstoff oder einem Gemisch verschiedener solcher Stoffe, insbesondere mit Gewürzen, wie Pfeffer (in Form von ganzen Pfefferkörnern, stückig und/oder fein gemahlen), Paprikapulver, getrockneten oder frischen Kräutern, Flüssigrauch, Trockenrauch, Pflanzenextrakten und ähnlichem beschichtet ist. Vorzugsweise besteht das Trägerband aus einem wasserlöslichen Material, das sich bei Kontakt mit der wasser- bzw. fetthaltigen Fleisch-, Wurst- oder Käseware innerhalb weniger Tage auflöst, so dass lediglich die ursprünglich auf dem Trägerband befindlichen Zusatzstoffe - vorzugsweise streifenförmig - auf der Oberfläche des Nahrungsmittels erkennbar sind.

Der Streifen 7 wird in einem Magazin 10 in Form eines Bandstapels (Faltenware) oder in Form einer Rolle vorgehalten. Für die Zuführung des Streifens 7, falls er in Form einer Rolle bereitgestellt wird, ist das Magazin 10 mit einer Rollenhalterung 11, insbesondere einer drehbar gelagerten zylindrischen Welle 11 ausgestattet.

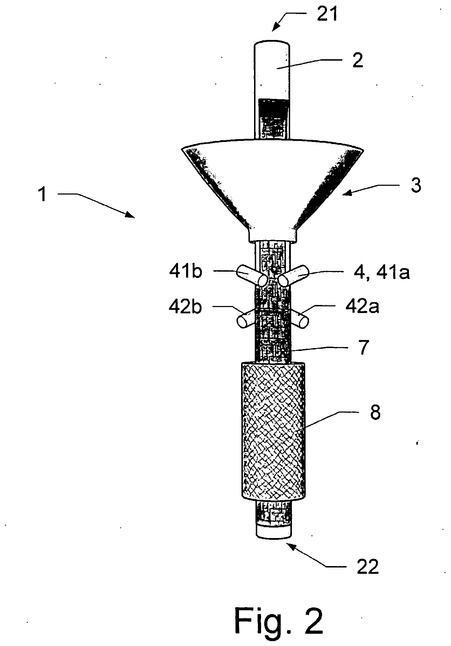

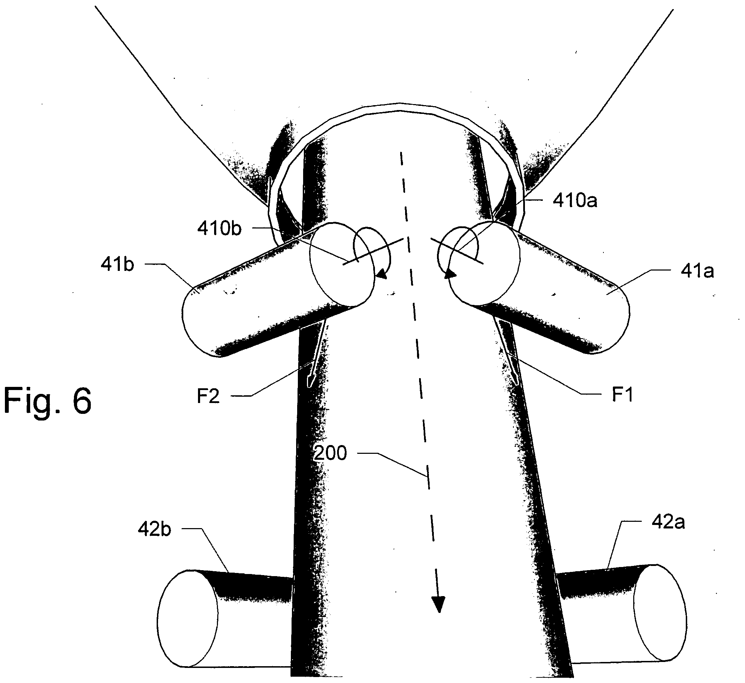

Der aus dem Magazin 10 ablaufende Streifen 7 wird über eine oder mehrere Führungsrollen 12, einen bogenförmigen Führungsbügel 5 und eine Anlegehülse 3 an die Außenseite des Füllrohrs 2 angelenkt. Hierbei wird der Streifen 7 in Längsrichtung des Füllrohres 2 unter einem flachen Winkel zur Mantelfläche des Füllrohres 2 und in azimutaler Richtung im wesentlichen zentriert zum Füllrohr 2 geführt. Hierbei ist mit dem Begriff "zentriert" gemeint, dass eine gedachte, mittig zwischen den Rändern des Streifens 7 verlaufende Mittellinie im wesentlichen parallel zu einer Längsachse (siehe Fig. 2 und 6) des Füllrohrs 2 ausgerichtet ist.

Die Anlegehülse 3 weist einen ersten und zweiten Bereich (31, 32) auf, wobei der erste Bereich 31 als teil- oder vollumfängliches Rohr und der zweite Bereich 32 nach Art eines teilweisen oder vollständigen Kegelmantels ausgebildet ist. Vorzugsweise ist die Anlegehülse 3 einstückig ausgebildet und besteht aus Metall oder Kunststoff, wobei der erste Bereich 31 mit dem zweiten Bereich 32 durch einen Übergangsbereich 33 mit einer stetigen Kontur und einer glatten Innenseite verbunden ist. Die stetige Kontur und die glatte Innenseite des Übergangsbereichs 33 gewährleisten, dass der Streifen 7 nahezu reibungsfrei an der Anlegehülse 3 entlang gleitet und die Gefahr eines Abrisses des Streifens 7 minimiert ist.

In dem konvex bzw. rohrförmig ausgebildeten ersten Bereich 31 wird der Streifen 7 in dem kreisförmigen, teil- oder vollumfänglich geschlossenen Spalt 6 zwischen dem Füllrohr 2 und der Anlegehülse 3 geführt. Aufgrund verfahrens- oder materialbedingter Schwankungen besteht hierbei die Gefahr, dass der Streifen 7 in Längsrichtung Falten bildet.

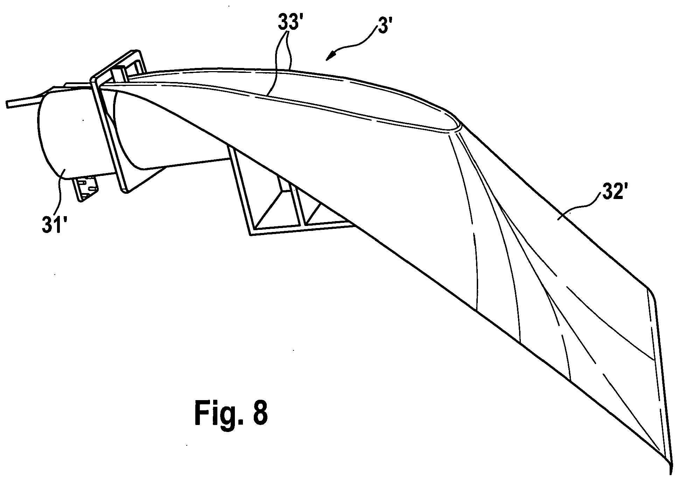

In Fig. 8 ist eine besonders bevorzugte Ausführungsform einer erfindungsgemäßen Anlegehülse 3' mit einem ersten und zweiten Bereich (31', 32') dargestellt, wobei der zweite Bereich 32', bezogen auf den ersten Bereich 31' konkav ausgebildet ist. Die Anlegehülse 3' ist zweckmäßigerweise einstückig ausgebildet und weist einen Übergangsbereich 33' mit stetiger Kontur auf, der den ersten Bereich 31' mit dem zweiten Bereich 32' verbindet.

Der Streifen 7 wird aufgrund der Zugkraft, die durch das Befüllen des Darmes in Längsrichtung auf ihn einwirkt, nach- bzw. zugeführt. Bedingt durch die längsgerichtete Zugkraft schmiegt sich der Streifen 7 an die konkave Kontur des zweiten Bereichs 32', wobei in Querrichtung eine Spannung induziert und der Streifen 7 auseinander und eventuell vorhandene Längsfalten glatt gezogen werden.

Die konvex-konkave Ausgestaltung des ersten und zweiten Bereichs (31', 32') und die dadurch induzierte Querspannung gewährleistet, dass der Streifen 7 in der gewünschten, teil- oder vollumfänglich geschlossenen Röhrenform und faltenfreien Legung aus dem ersten Bereich 31' tritt.

Optional umfasst die Vorrichtung 1 eine oder mehrere Anlegerollen (4, 41a, 41b, 42a, 42b). Die Anlegerollen (4, 41a, 41b, 42a, 42b) sind drehbar auf Achsen gelagert. Die Achsen der Anlegerollen sind vorzugsweise schwenkbar oder linear verschiebbar in Dreh- oder Gleitlagern gehalten und werden mittels elastischer Glieder, insbesondere mittels Federn im wesentlichen in radialer Richtung derart gegen die Außenseite des Füllrohr 2 kraftschlüssig gedrückt, dass der Streifen 7 zwischen den Anlegerollen (4, 41a, 41b, 42a, 42b) und dem Füllrohr 2 hindurchgeführt werden kann. Die Achsen der Anlegerollen sowie die zugehörigen Halterungen und Federn sind in Fig. 1 nicht dargestellt. Eine Vielzahl von hierfür geeigneten mechanischen Anordnungen ist im Stand der Technik bekannt, wobei eine gebrauchsfähige Konstruktion ohne weiteres aus kommerziell erhältlichen Komponenten zusammengestellt werden kann.

Die Anlegehülse 3, der Führungsbügel 5 und die Anlegerollen (4, 41a, 41b, 42a, 42b) sind auf einer in Fig. 1 nicht gezeigten Halterung gelagert, die im Bereich des Einlassendes 21 an dem Füllrohr 2 fixiert ist. Die Halterung ist zweckmäßig als Schiene oder Rahmen ausgebildet, der aus einem stabilen Werkstoff, wie Edelstahl gefertigt ist. Alternativ zur Montage am Füllrohr 2 kann die Halterung auch an einer mit dem Füllrohr 2 verbundenen Abfüllstation befestigt sein.

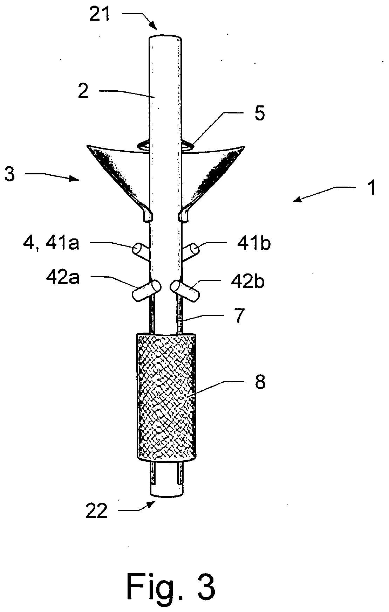

Die Fig. 2 und 3 zeigen Draufsichten auf die Oberseite und die Unterseite der Vorrichtung 1, wobei die "zentrierte" Anordnung des Streifens 7 relativ zum Füllrohr 2 gut erkennbar ist. Die Bezugszeichen entsprechen denen der Fig. 1.

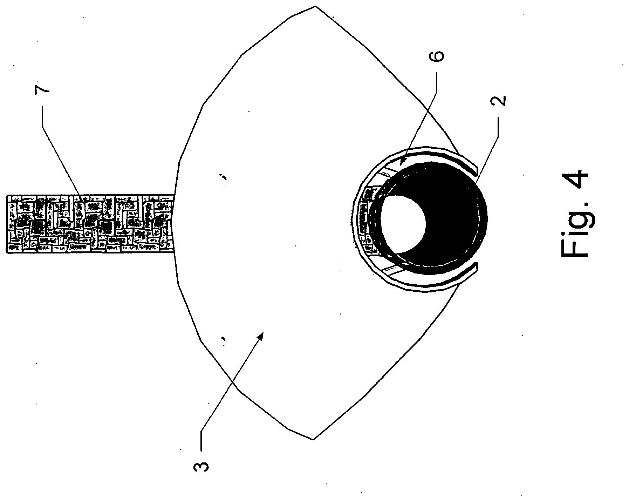

In Fig. 4 ist eine Schnittansicht des Füllrohrs 2 und der Anlegehülse 3 wiedergegeben. Ein Spalt 6 wird von der Außenseite des Füllrohres 2 und der Innenseite des Bereichs 31 der Anlegehülse 3 begrenzt. Der Spalt 6 erstreckt sich über einen Teil oder den vollen Umfang des Füllrohrs 2, hat in radialer Richtung zum Füllrohr 2 eine lichte Weite von 0,5 bis 10 cm, vorzugsweise von 0,7 bis 2,0 cm, besonders bevorzugt von 0.8 bis 1,5 cm und ist vollumfänglich offen.

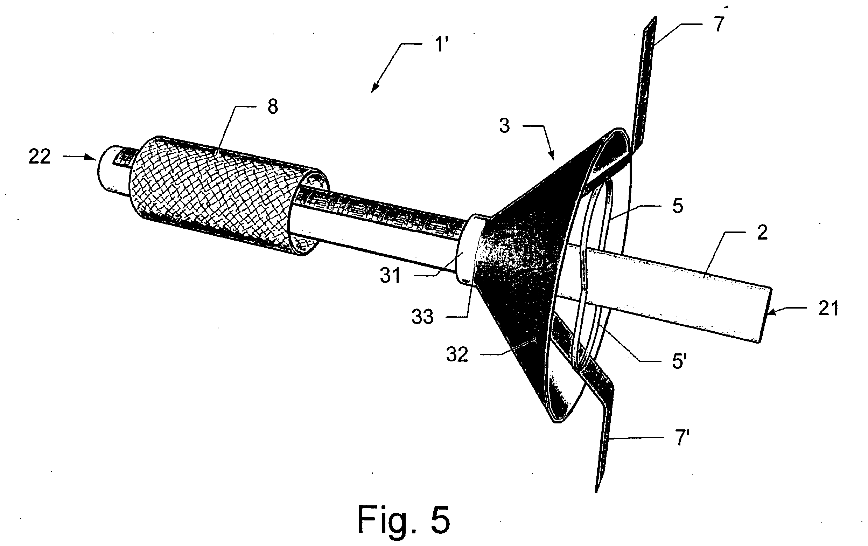

Fig. 5 zeigt eine andere bevorzugte Ausführungsform 1' der erfindungsgemäßen Vorrichtung, wobei ein erster Streifen 7 an der Oberseite des Füllrohrs 2 und ein zweiter Streifen 7' an der Unterseite des Füllrohrs 2 zugeführt wird. Die Vorrichtung 1' ermöglicht es, eine Fleisch- oder Wurstware mit zwei Streifen (7, 7'), die mit Zugaben verschiedener Farbe beschichtet und/oder imprägniert sind, beispielsweise schwarzem und rotem Pfeffer, auszustatten.

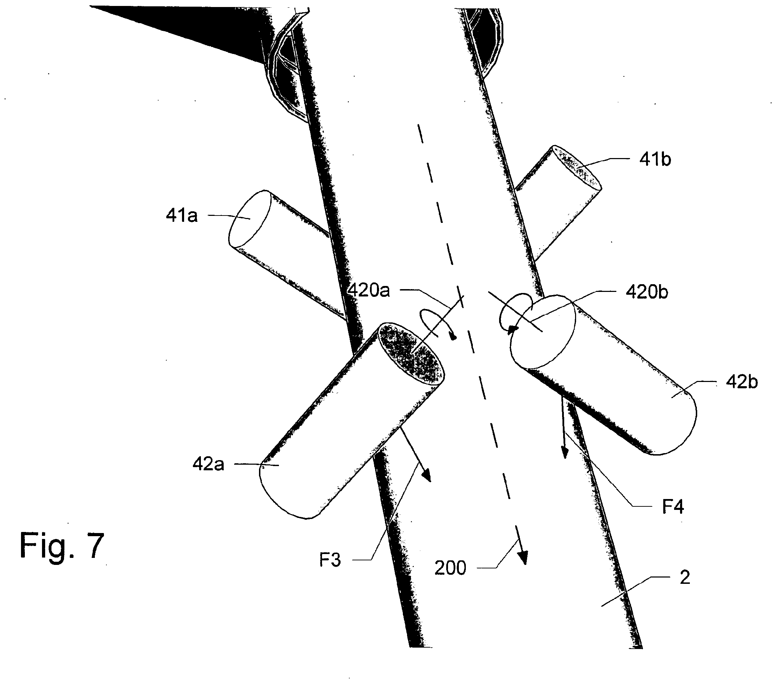

In Fig. 6 und 7 sind perspektivische Detailansichten der Anlegerollen (41a, 41b, 42a, 42b) wiedergegeben. Die Anlegerollen (41a, 41b) mit Drehachsen (410a, 410b) sind an der Oberseite des Füllrohrs 2 angeordnet, wobei die Drehachsen (410a, 410b) im wesentlichen V-förmig zu einer Längsachse 200 des Füllrohrs 2 ausgerichtet sind. Aufgrund dieser V-förmigen Ausrichtung der Drehachsen (410a, 410b) lenkt jede der Anlegerollen (41a, 41b) eine Hälfte des Streifens 7 von der Längsachse 200 des Füllrohrs 2 nach außen ab. Wie in Fig. 6 durch Pfeile F1 und F2 angedeutet, üben die Anlegegrollen (41a, 41b) hierbei auf den Streifen 7 in Umfangsrichtung des Füllrohrs 2 von der Längsachse 200 nach außen weisende Zugkräfte aus.

Wie in Fig. 7 dargestellt, sind in Füllrichtung - d.h. in Richtung vom Einlassende 21 zum Auslassende 22 - hinter den Anlegerollen (410a, 410b) die Anlegerollen (42a, 42b) mit Drehachsen (420a, 420b) an der Unterseite des Füllrohrs 2 angeordnet, wobei die Drehachsen (420a, 420b) ebenfalls im wesentlichen V-förmig zur Längsachse 200 des Füllrohrs 2 ausgerichtet sind. Im Gegensatz zu den Anlegerollen (41a, 41b) sind die Anlegerollen (42a, 42b) derart orientiert, dass sie jeweils eine Hälfte des Streifens 7 zur Längsachse 200 des Füllrohrs 2 hin lenken. Dies ist in Fig. 7 durch Pfeile F3 und F4 angedeutet.

Mit Hilfe der Anlegerollen (41a, 41b, 42a, 42b) wird in Umfangsrichtung des Füllrohres 2 eine teilweise oder vollständige Bedeckung mit dem Streifen 7 derart bewirkt, dass die in das Darmmaterial 8 gefüllte Fleisch- oder Wurstmasse teilweise oder vollständig von dem Streifen 7 umhüllt ist. Zudem werden Falten, die beim Verpacken, beim Auf- oder Abwickeln auf eine Rolle im Streifen 7 eventuell entstehen, geglättet.

## Patentansprüche

1. Vorrichtung (1) zum Einfüllen eines pastösen Nahrungsmittels in eine schlauchförmige Hülle (8), wobei die Vorrichtung ein Füllrohr (2) mit einem Einlassende (21) und einem Auslassende (22) aufweist, auf dem sich ein Vorrat (8) der Hülle in geraffter Form befindet, und die Vorrichtung (1) eine zwischen dem Einlassende (21) und dem Auslassende (22) angeordnete und das Füllrohr teil- oder vollumfänglich umgebende Anlegehülse (3) für einen oder mehrere mit Nahrungsmittelzusatzstoff(en) beschichtete Streifen (7, 7') umfasst, wobei das Füllrohr (2) und ein Teil der Anlegehülse (3) einen vollumfänglich offenen Spalt (6) begrenzen **dadurch gekennzeichnet, dass** die Vorrichtung mindestens eine zwischen der Anlegehülse (3) und dem Auslassende (22) angeordnete Anlegerolle (4) aufweist und ein elastisches Glied vorgesehen ist, welches die Anlegerolle (4) kraftschlüssig gegen das Füllrohr (2) drückt, derart, dass der Streifen (7) zwischen der Anlegerolle (4) und dem Füllrohr (2) hindurchgeführt werden kann, wobei das elastische Glied bevorzugt als Feder ausgebildet ist.

2. Vorrichtung (1) nach Anspruch 1, **dadurch gekennzeichnet, dass** der Spalt (6) in radialer Richtung zum Füllrohr (2) eine Weite von 0,5 bis 10 cm, vorzugsweise von 0,7 bis 2,0 cm, besonders bevorzugt von 0,8 bis 1,5 cm, aufweist.

3. Vorrichtung nach Anspruch 1 oder 2, **dadurch gekennzeichnet, dass** sich der Spalt (6) zwischen der Anlegehülse (3) und dem Füllrohr (2) in Richtung einer Längsachse (200) des Füllrohrs (2) über eine Länge von 0,5 bis 10 cm, vorzugsweise 1 bis 5 cm, und insbesondere 1 bis 2 cm erstreckt.

4. Vorrichtung (1) nach einem der Ansprüche 1 bis 3, **dadurch gekennzeichnet, dass** die Anlegehülse (3) einen ersten und zweiten Bereich (31, 32) aufweist, wobei der erste Bereich (31) als teil- oder vollumfängliches Rohr und der zweite Bereich (32) nach Art eines teilweisen oder vollständigen Kegelmantels ausgebildet ist, wobei der zweite Bereich (32) bezogen auf den ersten Bereich (31) vorzugsweise konkav ausgebildet ist.

5. Vorrichtung nach Anspruch 4, **dadurch gekennzeichnet, dass** die Anlegehülse (3) einstückig ausgebildet ist und ein den ersten und zweiten Bereich (31, 32) verbindender Übergangsbereich (33) eine stetige Kontur aufweist.

6. Vorrichtung nach einem der Ansprüche 1 bis 5, **dadurch gekennzeichnet, dass** sie einen oder mehrere bogenförmige Führungsbügel (5, 5') zum Anlenken der Streifen (7, 7') an die Führungshülse (3) aufweist.

7. Vorrichtung nach einem der Ansprüche 1 bis 6, **dadurch gekennzeichnet, dass** sie ein oder mehrere Magazine (10, 10') für die Streifen (7, 7') aufweist, wobei die Magazine (10, 10') bevorzugt eine Rollenhalterung (11, 11') zum Aufnehmen und Abwickeln der Streifen (7, 7') in Form einer Rolle umfassen.

8. Vorrichtung nach Anspruch 7, **dadurch gekennzeichnet, dass** die Magazine (10, 10') Führungsrollen (12, 12') zum Anlenken der Streifen (7, 7') an die Anlegehülse (3) umfassen.

9. Vorrichtung nach Anspruch 8
**dadurch gekennzeichnet, dass** sie ein Paar Anlegerollen (41a, 41b) mit Drehachsen (410a, 410b) aufweist, die im wesentlichen V-förmig von der Längsachse (200) des Füllrohrs (2) hinweg gerichtet sind, so dass jede der Anlegerollen (41a, 41b) eine Hälfte des Streifens (7) von der Längsachse (200) des Füllrohrs (2) hinweg lenkt und der Streifen (7) in Umfangsrichtung des Füllrohrs (2) auseinander gezogen wird.

10. Vorrichtung nach Anspruch 8 oder 9 **dadurch gekennzeichnet, dass** sie ein Paar Anlegerollen (42a, 42b) mit Drehachsen (420a, 420b) aufweist, die im wesentlichen V-förmig zur Längsachse (200) des Füllrohrs (2) hin ausgerichtet sind, so dass jede der Anlegerollen (42a, 42b) eine Hälfte des Streifens (7) zur Längsachse (200) des Füllrohrs (2) hinlenkt und der Streifen (7) in Umfangsrichtung des Füllrohrs (2) auseinander gezogen wird.

## Claims

1. Apparatus (1) for stuffing a pasty food into a tubular casing (8), the apparatus having a stuffing tube (2) with an inlet end (21) and an outlet end (22), on which a stock (8) of the casing in shirred form is located, and the apparatus (1) comprises an applicator sleeve (3) which is arranged between the inlet end (21) and the outlet end (22), surrounds the stuffing tube about part or the complete circumference and is intended for one or more strips (7, 7') coated with a food additive or with food additives, the stuffing tube (2) and part of the applicator sleeve (3) bounding a gap (6) which is open about the complete circumference, **characterized in that** the apparatus has at least one applicator roller (4) arranged between the applicator sleeve (3) and the outlet end (22), and an elastic element is provided which presses the applicator roller (4) frictionally against the stuffing tube (2) in such a manner that the strip (7) can be guided between the applicator roller (4) and the stuffing tube (2), the elastic element preferably being designed as a spring.

2. Apparatus (1) according to Claim 1, **characterized in that** the gap (6) has a width of 0.5 to 10 cm, preferably of 0.7 to 2.0 cm, particularly preferably of 0.8 to 1.5 cm, in the radial direction with respect to the stuffing tube (2).

3. Apparatus according to Claim 1 or 2, **characterized in that** the gap (6) between the applicator sleeve (3) and the stuffing tube (2) extends over a length of 0.5 to 10 cm, preferably 1 to 5 cm, and in particular 1 to 2 cm, in the direction of a longitudinal axis (200) of the stuffing tube (2).

4. Apparatus (1) according to one of Claims 1 to 3, **characterized in that** the applicator sleeve (3) has a first and second region (31, 32), the first region (31) being designed as a tube around part or the complete circumference and the second region (32) being designed in the manner of a partial or complete envelope of a cone, the second region (32) being designed preferably concavely with respect to the first region (31).

5. Apparatus according to Claim 4, **characterized in that** the applicator sleeve (3) is of single-piece design and a transition region (33) connecting the first and second region (31, 32) has a continuous contour.

6. Apparatus according to one of Claims 1 to 5, **characterized in that** it has one or more curved guide clips (5, 5') for coupling the strips (7, 7') to the guide sleeve (3).

7. Apparatus according to one of Claims 1 to 6, **characterized in that** it has one or more magazines (10, 10') for the strips (7, 7'), the magazines (10, 10') preferably comprising a reel holder (11, 11') for accommodating and unwinding the strips (7, 7') in the form of a reel.

8. Apparatus according to Claim 7, **characterized in that** the magazines (10, 10') comprise guide rollers (12, 12') for coupling the strips (7, 7') to the applicator sleeve (3).

9. Apparatus according to Claim 8, **characterized in that** it has a pair of applicator rollers (41a, 41b) with axes of rotation (410a, 410b) which are directed away from the longitudinal axis (200) of the stuffing tube (2) in a substantially V-shaped manner such that each of the applicator rollers (41a, 41b) deflects a half of the strip (7) away from the longitudinal axis (200) of the stuffing tube (2), and the strip (7) is pulled apart in the circumferential direction of the stuffing tube (2).

10. Apparatus according to Claim 8 or 9, **characterized in that** it has a pair of applicator rollers (42a, 42b) with axes of rotation (420a, 420b) which are oriented toward the longitudinal axis (200) of the stuffing tube (2) in a substantially V-shaped manner such that each of the applicator rollers (42a, 42b) deflects a half of the strip (7) toward the longitudinal axis (200) of the stuffing tube (2), and the strip (7) is pulled apart in the circumferential direction of the stuffing tube (2).

## Revendications

1. Dispositif (1) pour remplir d'un produit alimentaire sous forme de pâte une enveloppe en forme de boyau (8), dans lequel le dispositif comporte un tube de remplissage (2) avec une extrémité d'entrée (21) et une extrémité de sortie (22) sur laquelle se trouve une réserve (8) destinée à l'enveloppe sous forme froncée, dans lequel le dispositif (1) comprend un manchon d'application (3) agencé entre l'extrémité d'entrée (21) et l'extrémité de sortie (22), entourant le tube de remplissage sur une partie de sa circonférence ou sur la totalité de sa circonférence et destiné à une ou plusieurs bandes (7, 7') recouvertes d'un ou plusieurs additifs alimentaires et dans lequel le tube de remplissage (2) et une partie du manchon d'application (3) délimitent une fente (6) ouverte sur toute la circonférence, **caractérisé en ce que** le dispositif comporte au moins un rouleau d'application (4) agencé entre le manchon d'application (3) et l'extrémité de sortie (22) et **en ce qu'**il est prévu un élément élastique qui pousse par une force le rouleau d'application (4) contre le tube de remplissage (2) de telle sorte que la bande (7) peut être guidée entre le rouleau d'application (4) et le tube de remplissage (2), l'élément élastique étant conçu de préférence comme un ressort.

2. Dispositif (1) selon la revendication 1, **caractérisé en ce que** la fente (6) a dans la direction radiale par rapport au tube de remplissage (2) une largeur comprise entre 0,5 et 10 cm, de préférence entre 0,7 et 2,0 cm, de manière particulièrement préférée entre 0,8 et 1,5 cm.

3. Dispositif selon la revendication 1 ou 2, **caractérisé en ce que** la fente (6) s'étend entre le manchon d'application (3) et le tube de remplissage (2), dans la direction d'un axe longitudinal (200) du tube de remplissage (2), sur une longueur comprise entre 0,5 et 10 cm, de préférence entre 1 et 5 cm, en particulier entre 1 et 2 cm.

4. Dispositif (1) selon l'une quelconque des revendications 1 à 3, **caractérisé en ce que** le manchon d'application (3) comporte une première et une deuxième zone (31, 32), laquelle première zone (31) est conçue comme un tube sur une partie de sa circonférence ou sur la totalité de sa circonférence et laquelle deuxième zone (32) est conçue à la manière d'une enveloppe conique partielle ou totale, la deuxième zone (32) étant conçue de préférence concave par rapport à la première zone (31).

5. Dispositif selon la revendication 4, **caractérisé en ce que** le manchon d'application (3) est conçu d'une seule pièce et une zone de transition (33) reliant la première et la deuxième zone (31, 32) présente un contour continu.

6. Dispositif selon l'une quelconque des revendications 1 à 5, **caractérisé en ce qu'**il comporte un ou plusieurs étriers de guidage (5, 5') en forme d'arcs afin d'articuler les bandes (7, 7') au niveau du manchon de guidage (3).

7. Dispositif selon l'une quelconque des revendications 1 à 6, **caractérisé en ce qu'**il comporte un ou plusieurs magasins (10, 10') pour les bandes (7, 7'), lesquels magasins (10, 10') comprennent de préférence un support de rouleau (11, 11') destiné à recevoir et dérouler les bandes (7, 7') sous la forme d'un rouleau.

8. Dispositif selon la revendication 7, **caractérisé en ce que** les magasins (10, 10') comprennent des rouleaux de guidage (12, 12') afin d'articuler les bandes (7, 7') au niveau du manchon d'application (3).

9. Dispositif selon la revendication 8, **caractérisé en ce qu'**il comporte un couple de rouleaux d'application (41a, 41b) avec des axes de rotation (410a, 410b) qui sont dirigés sensiblement en forme de V s'éloignant de l'axe longitudinal (200) du tube de remplissage (2) de telle sorte que chacun des rouleaux d'application (41a, 41b) dévie de l'axe longitudinal (200) du tube de remplissage (2) une moitié de la bande (7) et que la bande (7) est étirée dans la direction circonférentielle du tube de remplissage (2).

10. Dispositif selon la revendication 8 ou 9, **caractérisé en ce qu'**il comporte un couple de rouleaux d'application (42a, 42b) avec des axes de rotation (420a, 420b) qui sont orientés sensiblement en forme de V en direction de l'axe longitudinal (200) du tube de remplissage (2) de telle sorte que chacun des rouleaux d'application (42a, 42b) dévie vers l'axe longitudinal (200) du tube de remplissage (2) une moitié de la bande (7) et que la bande (7) est étirée dans la direction circonférentielle du tube de remplissage (2).
